# EUROPÄISCHE PATENTSCHRIFT

(11) **EP 3 695 062 B1**
(45) Veröffentlichungstag und Bekanntmachung des Hinweises auf die Patenterteilung: **27.03.2024**
(21) Anmeldenummer: 18786296.6
(22) Anmeldetag: 11.10.2018
(51) Int. Cl.: E04B 1/41, E04B 5/02, E04C 3/29, B01D 35/28, B01D 39/10, B01D 46/40, D21F 1/00

(54) **ANKERELEMENT, BETONBAUTEIL MIT ANKERELEMENT UND HERSTELLUNGSVERFAHREN**
ANCHOR ELEMENT, CONCRETE COMPONENT WITH ANCHOR ELEMENT AND PRODUCTION METHOD
ÉLÉMENT D'ANCRAGE, PIÈCE EN BÉTON POURVUE D'UN ÉLÉMENT D'ANCRAGE ET PROCÉDÉ DE FABRICATION

(30) Priorität: 13.10.2017 DE 102017123874
(43) Veröffentlichungstag der Anmeldung: 19.08.2020
(73) Patentinhaber: Nevoga Immo s.r.o., 67181 Znojmo (CZ)
(72) Erfinder: LEHNEN, Dieter, 58454 Witten (DE); MEYER, Joachim, 45144 Essen (DE); SPEIER, Ludger, 78333 Stockach (DE); SPOHR, Ingo, 45549 Sprockhövel (DE); PRILHOFER, Jana, 83395 Freilassing (DE); PRILHOFER, Christian, 83395 Freilassing (DE)
(74) Vertreter: Grünecker Patent- und Rechtsanwälte PartG mbB
(86) Internationale Anmeldenummer: PCT/EP2018/077772
(87) Internationale Veröffentlichungsnummer: WO 2019/072985

(56) Entgegenhaltungen:
- WO-A1-84/04940
- DE-A1-102015 103 751
- GB-A- 2 332 917
- US-A- 4 899 512
- US-A1- 2012 207 961

## Beschreibung

Die vorliegende Erfindung betrifft ein Betonbauteil mit einem einbetonierten Ankerelement. Darüber hinaus betrifft die vorliegende Erfindung ein Verfahren, zur Herstellung eines Betonbauteils mit einbetonierten Ankerelement. Zudem beschreibt die Erfindung die Verwendung eines Ankerelements in einem Betonbauteil zur Verbindung mit einem weiteren Betonbauteil. Das Bauen mit Betonfertigbauteilen, meist in der Form von Stahlbetonbauteilen, bei dem die einzelnen Stahlbetonbauteile werkmäßig gefertigt, das heißt als Fertigteile zur Baustelle transportiert und dort zu Bauwerksteilen, Baugruppen oder Bauwerken zusammengefügt werden, ist allgemein bekannt.

Im Stand der Technik werden zur Verbindung der Betonfertigbauteile miteinander eine Vielzahl an Verbindungsmethoden verwendet.

Eine bekannte Methode bei Stahlbetonbauteilen besteht darin, die zu verbindenden Stahlbetonbauteile mit einer Anschlussbewehrung auszustatten, diese in einem zwischen den Bauteilen angeordneten Vergussbereich zu überlappen oder anderweitig zu verbinden und sodann den Vergussbereich mit Vergussbeton zu verfüllen, wobei nach dessen Aushärtung eine tragfähige Verbindung entsteht. Nachteilig hierbei ist, dass es aufgrund des Aushärteprozesses mehrere Tage dauert, bis die Verbindung über die erforderliche Tragfähigkeit verfügt. Dies führt zu einer Verlängerung der Bauzeit, Unter gewissen Umgebungsbedingungen, wie Hitze oder Kälte, ist es sogar so, dass derartige Verbindungen nur unter der Verwendung von aufwändigen und zeitintensiven Zusatzarbeiten oder Zusatzstoffen möglich sind.

Eine weitere bekannte Möglichkeit ist, dass in zu verbindenden Stahlbetonbauteilen Ankerelemente aus Stahl integriert sind. Im Rahmen einer Montage können dann die Bauteile mittels Schraub- oder

Schweißlaschen miteinander verbunden werden. Nachteilig hierbei ist, dass nur kleinste Bautoleranzen erlaubt sind. Bereits kleine Abweichungen von der Sollgeometrie führen dazu, dass die Verbindungen nicht mehr planmäßig ausgeführt werden können, wodurch Nacharbeiten erforderlich werden und der Bauablauf beeinträchtigt wird. Schlimmstenfalls kann es sogar sein, dass sich die Bauteile nicht miteinander verbinden lassen.

Eine technische Lösung, die eine Verbindung von Betonfertigbauteilen mit anderen Bauteilen auch bei Bauungenauigkeiten ohne Aufwand ermöglicht, ist bekannt aus der WO 2016/146543 A1.

Gemäß dieser technischen Lösung weist ein Betonfertigbauteil wenigstens einen Verbindungsabschnitt zur Verbindung des Betonfertigbauteils mit einem weiteren Bauteil auf und zeichnet sich dadurch aus, dass der Verbindungsabschnitt eine holzartige Beschaffenheit aufweist, so dass Verbindungselemente aus dem Bereich der Holztechnik zur Verbindung der Bauteile in dem Verbindungsabschnitt anordbar sind.

Diese technische Lösung weist den Vorteil auf, dass in Bezug auf Bauungenauigkeiten eine große Unempfindlichkeit erreicht und Betonfertigbauteile ohne großen Aufwand einfach und schnell mit anderen Bauteilen mittels bekannten Verbindungselementen verbinden lässt. Dies wird dadurch erreicht, dass der Verbindungsabschnitt eine holzartige Beschaffenheit aufweist.

Unter einem Verbindungsabschnitt mit einer holzartigen Beschaffenheit sind hierbei und im Sinne der vorliegenden Anmeldung allgemein solche Vorbindungsabschnitte zu verstehen, die eine Beschaffenheit aufweisen, die ähnlich derjenigen von Holz bzw. einem Holzwerkstoff ist. Die Beschaffenheit eines solchen Verbindungsabschnitts muss der von Holz bzw. einem Holzwerkstoff nicht exakt entsprechen. Es ist vielmehr ausreichend, wenn der Verbindungsabschnitt so ausgebildet ist, dass er aus der Holztechnik bekannte Verbindungselemente aufnehmen kann. Zu den bekannten Verbindungselementen der Holztechnik zählen insbesondere Holzschrauben oder Nägel, Vollgewindeschrauben oder Dübel, die in das holzartig
beschaffene Material bestimmungsgemäß eingebracht werden.

Der aus der WO 2016/146543 A1 bekannte Verbindungsabschnitt mit holzartiger Beschaffenheit wird bereitgestellt durch ein Ankerelement aus einem Material mit holzartiger Beschaffenheit, wobei das Ankerelement in das Betonbauteil eingegossen ist. Weitere Stand der Technik ist in der GB 1 291 248 A1, EP 1 882 787 A2, DE 10 2007 002 309 A1 und WO 2016/146 543 A1 beschrieben.

Der vorliegenden Anmeldung liegt die Aufgabe zugrunde, bei einem Betonbauteil mit einem Verbindungsabschnitt mit holzartiger Beschaffenheit die Verbindung weiter zu optimieren, sowohl hinsichtlich der Höhe der übertragbaren Kräfte als auch hinsichtlich der Verbindungssicherheit

Insbesondere löst die vorliegende Erfindung diese Aufgabe mit einem Betonbauteil mit den Merkmalen von Anspruch 1, mit einem Verfahren mit den Merkmalen des Anspruch 8 und der Verwendung eines Ankerelements gemäß Anspruch 10. Vorteilhafte Ausgestaltungen sind jeweils Gegenstand der abhängigen Patentansprüche. Es wird darauf hingewiesen, dass die in den Patentansprüchen einzeln aufgeführten Merkmale auch in beliebiger und technologisch sinnvoller Weise miteinander kombiniert werden können und somit weitere Ausgestaltungen der Erfindung aufzeigen. Das erfindungsgemäße Ankerelement weist einen Ankerkörper auf aus einem Kunststoff, der holzartige Eigenschaften aufweist. Eine holzartige Eigenschaft im Sinne dieser Anmeldung betrifft insbesondere die Eigenschaft eines Kunststoffs, dazu geeignet zu sein, dass eine Holzschraube In das Material eingeschraubt werden kann. Dies ist beispielsweise bei Stein oder Beton nicht der Fall. Vorzugsweise ist das Material mit der holzartigen Eigenschaft so beschaffen, dass eine Holzschraube ohne Vorbohren in das Material eingeschraubt werden kann und dass hierbei vorzugsweise keine Rissbildung im Sinne eines Aufspalten oder Aufberstens auftritt, insbesondere keine mit bloßem Auge zu erkennenden Risse.

Eine weitere holzartige Eigenschaft im Sinne dieser Anmeldung betrifft eine Materialfestigkeit, wie sie im Holzbau vorausgesetzt wird, wo beispielsweise Holzbalken in Tragwerken durch Holzschrauben verbunden werden, Anwendungsbeispiele, die dem Fachmann eindeutige Hinweise auf die erforderliche Materialfestigkeit vermitteln, sind beispielsweise in der WO 2016/146543 A1 offenbart als Verbindungsabschnitt mit holzartiger Beschaffenheit, Expandiertes Polystyrol, wie es beispielsweise als Schaumstoff und Verpackungsmittel eingesetzt wird, weist beispielsweise keine mit Holz vergleichbare Materialfestigkeit auf und ist daher nicht holzartig im Sinne der vorliegenden Anmeldung.

Eine mechanische Kenngröße, die dem Fachmann hilft, einen geeigneten Kunststoff für das Ankerelement zu ermitteln, ist eine mindestens übertragbare Schubspannung im Kontaktbereich zwischen einem Schraubengewinde und dem diese umgebenden Kunststoff. Dieser Kontaktbereich wird näherungsweise durch einen Zylindermantel gebildet, dessen Oberfläche sich aus dem Produkt aus der im Körper steckenden Gewindelänge multipliziert mit dem Nennumfang der Schraube berechnet. Der Nennumfang ist seinerseits definiert als der Gewindeaußendurchmesser im zylindrischen Bereich des Gewindes multipliziert mit der Kreiszahl Pi. Mit anderen Worten, betrachtet wird der Zylindermantel, in dem im Zugversuch die Bruchfläche entsteht, wenn beim Herausziehen Material zwischen den Gewindegängen "hängen" bleibt.

Vorzugsweise werden für den Ankerkörper dos Ankerelements Kunststoffe verwendet, die geeignet sind, eine derartige Schubspannung von mindesten 5 N/mm², insbesondere von mindesten 8 N/mm² zu übertragen, bevor es unter reinem axialen Zug zum Herausziehen der Schraube aus dem Kunststoffmaterial kommt.

Gut geeignet als Material für den Ankerkörper des erfindungsgemäßen Ankerelements ist Gießharz, insbesondere Polyurethan-Gießharz (PU Gießharz), beispielsweise ausgehärteter und gegebenenfalls getemperter gefüllter Polyurethan-Gießharz.

Das erfindungsgemäße Ankerelement weist zudem ein Gewebe auf, mit dem zumindest ein Teil der Außenoberfläche des Ankerkörpers armiert ist. Diese Armierung von zumindest einem Teil der Außenoberfläche des Ankerkörpers, im Folgenden auch Außenarmierung genannt, verbessert entscheidend die Verbindung mit dem Beton eines Betonbauteils, in den das Ankerelement zur Bereitstellung eines erfindungsgemäßen Betonbauteils eingebracht ist, wie nachfolgend noch detailliert beschrieben wird.

Ein Gewebe im Sinne der vorliegenden Anmeldung, im Folgenden auch Armierungsgewebe genannt, ist im breitesten Sinne ein flächiges und im nicht verbauten Grundzustand nicht-starres Gebilde wie beispielsweise eine Matte aus Glasfasergewebe. Allerdings ist das Gewebe keineswegs auf Materialien aus Glasfasern beschränkt, sondern kann beispielsweise auch ein Karbongewebe, beispielsweise Keflar, oder ein Teflongewebe sein. Ein Gewebe der hier in Rede stehenden Art umfasst jegliche Machart, bei der Fasern oder Drähte zu einem flachen Gebilde zusammengefügt werden, wobei die Fasern oder Drähte beispielsweise als sich kreuzende Fasern, Drähte oder Bündeln angeordnet sein können, jedoch auch beispielsweise so beschaffen sein können, dass kurze Einzelfasern oder Einzeldrähte bezüglich Ihrer Anordnungsrichtung in der Fläche des Gewebes wirr, das heißt ohne bevorzugte Ausrichtung der Einzelfasern, angeordnet sind.

Der bestimmungsgemäße Gebrauch eines Ankerelements der vorstehend erläuterten Art besteht darin, in ein Betonbauteil eingebracht zu werden zur Bereitstellung eines erfindungsgemäßen Betonbauteils.

Der Begriff Beton im Sinne der vorliegenden Anmeldung umfasst jedwede Art von Beton, insbesondere sowohl Stahlbeton, Spannbeton und unbewehrten Beton in werksmäßiger Herstellung als Betonfertigteil als auch Beton in örtlicher Baustellenfertigung als sogenannten Ortbeton.

Vorzugsweise wird das vorab gefertigte Ankerelement zunächst entsprechend positioniert, ähnlich, wie dies mit Bewehrungsstählen oder Einbauteilen im Stahlbetonbau allgemein bekannt ist, und geht dann, wenn der Beton eingegossen wird, mit dem Beton eine Verbindung ein, die es erlaubt, dass von dem Ankerelement Kräfte auf den Beton und damit auf das Betonbauteil übertragen werden können,

Hinsichtlich der Art der Einbringung und Anordnung des Ankerelements in ein Betonbauteil wird wiederum auf die WO 2016/146543 A1 verwiesen. In grundsätzlich gleicher Weise wie bei den in der WO 2016/146543 A1 dargestellten und erläuterten Ausführungsbeispielen erlaubt es auch bei der vorliegenden Erfindung die holzartige Eigenschaft des Kunststoffs des Ankerkörpers des Ankerelements, dass in eine an der Außenseite des Betonbauteils liegende Fläche des Ankerelements eine Holzschraube zur Verbindung des Betonbauteils mit einem anderen Bauelement eingeschraubt wird.

Wesentlich verbessert gegenüber dem Stand der Technik gemäß der WO 2016/146543 A1 ist die Verbindung zwischen dem Ankerelement und dem Betonbauteil infolge der erfindungsgemäßen Außenarmierung. Wie vorstehend ausgeführt, ist das Ankerelement erfindungsgemäß an zumindest einem Teil seiner Oberfläche mit einer Außenarmierung versehen. Das Material des Ankerkörpers des Ankerelements und das Gewebe der Außenarmierung bilden zusammen einen Verbundwerkstoff. Ein derartiger Verbundwerkstoff ermöglicht verbesserte mechanischen Eigenschaften bei der Verwendung in einem Betonbauteil gegenüber einem Ankerelement mit holzartiger Beschaffenheit gemäß dem Stand der Technik, das ohne die erfindungsgemäße Außenarmierung in den Beton eingebracht wird. Insbesondere verbessert diese Außenarmierung entscheidend die Verbindung mit dem Beton des Betonbauteils. Während für die unmittelbare Übertragung der Kräfte der Holzschraube auf das Ankerelement die mechanischen Eigenschaften des Ankerelements maßgeblich sind, wird das Gesamttragverhalten durch die erfindungsgemäße Außenarmierung mitbestimmt und im Ergebnis entscheidend verbessert. Während nämlich ein nicht außenarmiertes Ankerelement zum Sprödbruch neigt, was die Eignung und Verwendbarkeit eines derartigen Betonbauteils erheblich einschränken kann, kann mittels der Außenarmierung das Gesamttragverhalten des Verankerungssystems und damit des erfindungsgemäßen Betonbauteils derart gesteuert werden, dass ein duktiles Bruchverhalten und zusätzliche eine Steigerung der Belastbarkeit erreicht wird.

In einer vorteilhaften Ausführungsform ist das Ankerelement so ausgebildet, dass eine sogenannte Schwalbenschwanzverbindung mit dem Beton des Betonbauteils erreicht wird, bei der das Ankerelement mit einer Schmalseite an der Oberfläche des Betons zu liegen kommt, so dass es sich mit zunehmender Verankerungstiefe im Betonbauteil in zumindest einer Richtung quer zur Verankerungstiefe verbreitert. Bei allseitiger Einbettung des Ankerelements in das Betonbauteil, mit Ausnahme der Anschlussseite in der Oberfläche des Betonbauteils zur Bereitstellung des Verbindungsabschnitts mit holzartiger Beschaffenheit, in den die Verbindungselemente, beispielsweise in Form von Holzschrauben, in das Ankerelement eingebracht werden können, können auf diese Weise senkrecht zur Oberfläche des Betonbauteils wirkende Zug- und Druckkräfte sowie tangential zur Oberfläche des Betonbauteils wirkende Schubkräfte sehr vorteilhaft in das Ankerelement eingeleitet und von diesem durch Kontakt in den umgebenden Beton übertragen werden.

Aufgrund der holzartigen Beschaffenheit des Ankerkörpers des Ankerelements können Verbindungsmittel, die üblicherweise aus dem Holzbau bekannt sind, insbesondere großkalibrige Holzschrauben, als Verbindungsmittel verwendet werden, um Kräfte in das Ankerelement einzuleiten. Diese Verbindungsmittel können auch, falls durch entsprechende Anordnung des Gewebes am Ankerkörper erforderlich, das Gewebe der Außenarmierung, durchdringen.

Die Herstellung des Ankerelements erfolgt vorzugsweise durch Eingießen eines gefüllten Polyurethan-Gießharzes in eine Gießform, in die zuvor das Gewebe zur Bereitstellung der Außenarmierung, im Folgenden auch als Armierungsgewebe bezeichnet, eingelegt wurde. Dabei ist eine Ausgestaltung der Gießform als Barrenform besonders vorteilhaft. Mit Barrenform ist hier eine prismatische Form gemeint, deren obere Einfüllöffnung breiter ist als die Bodenseite.

Eine solche Form bietet den Vorteil, dass das Armierungsgewebe einfach und faltenfrei eingelegt werden kann. Der Grad an Faltenfreiheit erhöht die spätere Tragwirkung als Verbundwerkstoff, da hierdurch ein möglichst hoher Anteil des Armierungsgewebes nahe an der Oberfläche des Ankerelements liegt. Dies ist vorteilhaft für die mechanischen Eigenschaften der Verbindung des Ankerelements in dem Betonbauteil, da hierdurch eine Öffnung initialer Risse verringert wird.

Eine vorteilhafte Möglichkeit der Herstellung eines erfindungsgemäßen Ankerelements besteht darin, eine Lage Armierungsgewebe in eine trockene Gießform einzulegen und sodann Gießharz zur Herstellung des Ankerelements in die Form zu gießen, so dass das flüssige Gießharz das Armierungsgewebe flächig und faltenfrei an die Gießform drückt. Bei geeigneter Abstimmung der Viskosität des Gießharzes auf die Saugfähigkeit des Armierungsgewebes wird letzteres getränkt. Im Ergebnis wird hierdurch in einem Arbeitsgang ein Ankerelement aus einem Verbundwerkstoff bestehend aus Gießharz und Armierungsgewebe erzeugt, das an allen Kontaktflächen zur Gießform, die mit dem Gewebe bedeckt sind, eine Armierung aus Gewebe aufweist.

Nach dem Ausformen und Aushärten kann der Kunststoffbarren aus der Gießform entnommen und in Scheiben geeigneter Dicke aufgeschnitten werden, woraus sich unmittelbar und in vorteilhafter Form erfindungsgemäße Ankerelemente für die erfindungsgemäßen Betonbauteile ergeben.

Alternativ zum vorstehend beschriebenen trockenen Einlegen eines einlagigen Gewebes mit direktem Barrenguss auf endgültige Stärke kann das Armierungsgewebe auch mehrlagig eingebaut werden, was allerdings ein Laminieren voraussetzt, damit die einzelnen Gewebelagen sich verbinden. Dies kann so erfolgen, dass auf die erste Lage Gewebe eine kleine Menge Gießharz flächig aufgetragen wird, so dass das Gewebe der Folgelage flächig und blasenfrei in Harz eingebettet werden kann. Auch ein Vortränken des Gewebes ist möglich. Nach diesen Arbeitsgängen erfolgt das Auffüllen der Gießform bis auf die gewünschte Barrenstärke.

Das erfindungsgemäße Betonbauteil mit dem eine Außenarmierung aufweisenden Ankerelement kann vorteilhaft zum Einsatz kommen bei Anwendungsfällen, wie sie in der WO 2016/146543 A1 offenbart sind, ist jedoch nicht auf diese Anwendungsfälle beschränkt. Das erfindungsgemäße Betonbauteil eignet sich für jedwede Art der Einleitung von Kräften in Beton unter Zuhilfenahme von Verbindungsmitteln aus dem Holzbau, vorzugsweise Holzschrauben. So können beispielsweise Deckenverkleidungen oder Fassadenelemente unter Zuhilfenahme eines erfindungsgemäßen Betonbauteils mit einem Ankerelement der vorstehend erläuterten Art befestigt werden, indem entsprechende Metallbeschläge mittels Holzschrauben an dem Verbindungsabschnitt mit holzartiger Beschaffenheit, das heißt der freiliegenden Fläche des in dem Betonbauteil eingebetteten Ankerelements angeschraubt werden.

Das Ankerelement kann in das Betonbauteil einbetoniert sein, indem es vor dem Gießen der Betonbauteils in die jeweilige Form eingelegt und der Beton dann eingegossen wird. Es ist aber auch möglich, dass beim Gießen der Betonbauteile, die auch Stahlbetonbauteile sein können, durch das Einlegen von Platzhaltern Hohlräume für die Verbindungsabschnitte vorgesehen sind und die Hohlräume dann nachträglich mit den Verbindungsabschnitten bestückt beziehungsweise ausgefüllt werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen. Die Erfindung ist jedoch nicht auf die gezeigten Ausführungsvarianten beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
Fig. 1 eine geschnittene Seitenansicht einer Anordnung zur Verbindung von Betonbauteilen in einer ersten Ausgestaltung,
Fig. 2 die Anordnung gemäß Fig. 1 in Draufsicht,
Fig. 3 ein Vertikalschnitt eines Stahlbetonbauteils in einer Ausgestaltung,
Fig. 4 eine perspektivische Ansicht zweier miteinander verbundenen Ankerelemente,
Fig. 5 eine geschnittene Draufsicht einer Anordnung zur Verbindung von Betonbauteilen in einer zweiten Ausgestaltung,
Fig. 6 eine perspektivische Ansicht auf miteinander verbundene Ankerelemente gemäß Fig. 5,
Fig. 7 eine geschnittene Draufsicht einer Anordnung zur Verbindung von Betonbauteilen in einer dritten Ausgestaltung, wobei die Betonbauteile noch nicht miteinander verbunden sind,
Fig. 8 eine geschnittene Draufsicht einer der Anordnung in der dritten Ausgestaltung, wobei die Betonbauteile durch Ankerelemente miteinander verbunden sind,
Fig. 9 eine Vorderansicht der in Figur 8 dargestellten Anordnung,
Fig. 10 ein Anwendungsbeispiel in Bezug auf eine Fassadenverankerung,
Fig. 11 ein Anwendungsbeispiel in Bezug auf eine weitere Art der Verankerung,
Fig. 12 in Darstellungen A bis D Herstellungsschritte eines ersten Ausführungsbeispiels eines Verfahrens zur Herstellung eines Ankerelements,
Fig. 13 in Darstellungen A bis E Herstellungsschritte eines zweiten Ausführungsbeispiels eines Verfahrens zur Herstellung eines Ankerelements,
Fig. 14 in Darstellungen A bis E Herstellungsschritte eines dritten Ausführungsbeispiels eines Verfahrens zur Herstellung eines Ankerelements und
Fig. 15 ein Diagramm zur Darstellung der Ergebnisse eines Vergleichsversuchs.

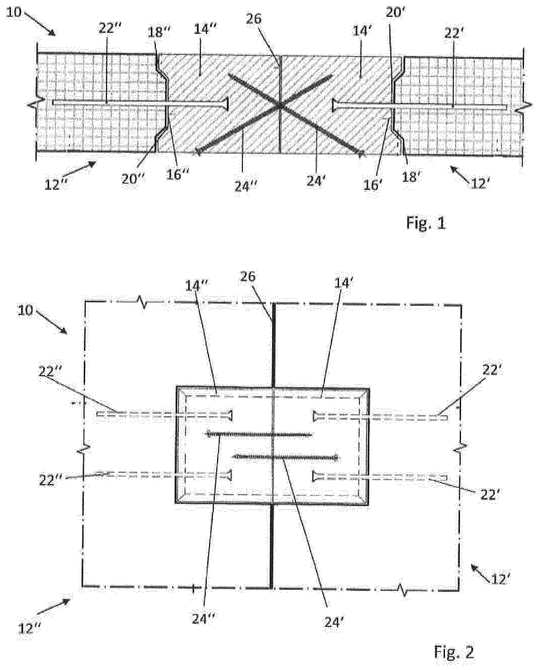

Die Figur 1 zeigt schematisch eine geschnittene Seitenansicht einer Anordnung 10 in einer ersten Ausgestaltung. Die Anordnung umfasst zwei Stahlbetonbauteile 12', 12", wobei die Stahlbetonbauteile 12', 12" jeweils eine Angrenzungsfläche 26 aufweisen, mit der sie wenigstens partiell flächig aneinander grenzen. Die Stahlbetonbauteile 12', 12" sind vorliegend mittels Verbindungselementen 24', 24" an ihren Schmalseiten miteinander verbunden. Die Stahlbetonbauteile 12', 12" weisen wenigstens einen Verbindungsabschnitt in Form von Ankerelementen 14', 14" auf, der sich bevorzugt über die gesamte Stahlbetonbauteildicke erstreckt. Die Ankerelemente 14', 14" sind aus einem Kunststoff gefertigt, der eine holzartige Beschaffenheit aufweist, und weisen eine Außenarmierung auf, die nachfolgend noch erläutert wird. Durch die holzartige Beschaffenheit ist es möglich, die Stahlbetonbauteile 12', 12" mit aus dem Bereich der Holztechnik bekannten Verbindungselementen 24', 24" zu verbinden. Die Seiten der Ankerelemente 14', 14", die an den Beton angrenzen, können eine Profilierung 16', 16" aufweisen mit beispielsweise wenigstens einer Vertiefung 20', 20" und daran angrenzende Vorsprüngen 18', 18", so dass sie in einer Art Nut-Federverbindung ausgebildet sind.

Die Stahlbetonbauteile 12', 12" können Verankerungsstäbe 22', 22" aufweisen. Die Verankerungsstäbe 22', 22" dienen der Verbindung der Ankerelemente mit dem Beton. Durch den Verankerungsstab 22', 22" wird eine zugfeste Verankerung des Ankerelements im Beton erreicht. Der Verankerungsstab 22', 22" weist bevorzugt eine Oberflächenprofilierung auf (ähnlich wie bei bekanntem Betonstahl). Hierdurch kann die Haftung im Ankerelement 14', 14" und dem Beton erhöht werden.

Als Verbindungselemente 24', 24" finden vorliegend Vollgewindeschrauben Anwendung. Idealerweise weisen die Verbindungselemente 24', 24" ein selbstschneidendes Gewinde, gegebenenfalls in Verbindung mit einer Bohrsitze, auf. Hierdurch ist es möglich, die Verbindungselemente 24', 24" irgendwo in die Ankerelemente 14', 14" einzubringen. Dies ermöglicht große Toleranzen bei der Fertigung und der Montage der Stahlbetonbauteile 12', 12".

Die Verbindungselemente 24', 24" liegen kreuzförmig übereinander. Dies bedeutet, dass ein Verbindungselement 24' in ein erstes Stahlbetonbauteil 12' beziehungsweise in den an diesem angeordneten Ankerelement 14' eingebracht worden ist, während ein weiteres Verbindungselement 24" in ein zweites Stahlbetonbauteil 12"beziehungsweise in den an diesem angeordneten Ankerelement 14" eingebracht worden ist In Figur 1 verlaufen die Verbindungselemente 24', 24" ferner in einem Winkel von etwa 40° zu der Angrenzungsfläche 26. Auf diese Weise entsteht eine Verbindung, die Zug, Druck und Scherung besonders gut übertragen kann.

Figur 2 zeigt eine schematische Draufsicht der Anordnung 10 in der ersten Ausgestaltung. Die Anordnung 10 weist zwei Verbindungselemente 24', 24" auf, die in parallel zueinander liegenden Ebenen verlaufen. Die jeweiligen Ankerelemente 14', 14" sind durch jeweils zwei Verankerungsstäbe 22', 22", die parallel zueinander verlaufen, mit dem Beton verbunden. Die Verankerungsstäbe 22', 22" sind bevorzugt jeweils als längliches stabförmiges Element ausgebildet, das idealerweise einen Kopf und einen Schaft aufweist, wobei der Kopf breiter als der Schaft ist.

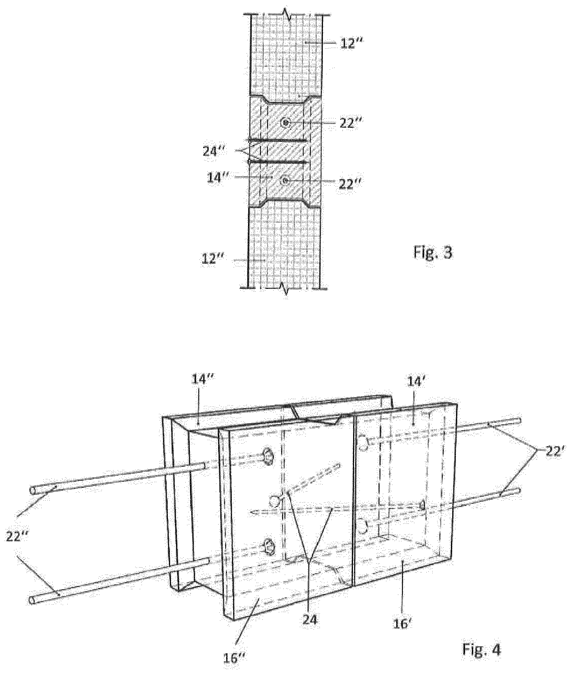

Figur 3 zeigt schematisch einen Vertikalschnitt einer Ausführungsform eines Stahlbetonbauteils 12" in einer Ausgestaltung. Zu erkennen ist, dass das Ankerelement 14" nicht entlang der gesamten Schmalseite bzw. der Angrenzungsfläche 26 des Stahlbetonbauteils 12" verläuft, sondern nur entlang eines Teils davon. Denkbar ist, dass entlang der Schmalseite bzw. der Angrenzungsfläche 26 noch weitere Ankerelemente angeordnet sind, die in Figur 3 nicht gezeigt sind.

Figur 4 zeigt eine perspektivische Draufsicht auf zwei miteinander verbundene Ankerelementen 14', 14" in einer möglichen Ausgestaltung. Die Ankerelemente 14', 14" liegen flächig aneinander. Die Ankerelemente 14', 14" sind durch zwei aus dem Bereich der Holztechnik bekannte Verbindungselemente 24', 24" verbunden. Die Verbindungselemente 24', 24" verlaufen nicht parallel zueinander. Sie können schief angeordnet sein. Beide Ankerelemente 14', 14" weisen jeweils zwei parallel zueinander verlaufende Verankerungsstäbe 22', 22" auf. Die Verankerungsstäbe 22', 22" erstrecken sich aus der Rückseite der Ankerelemente 14', 14" in die (hier nicht dargestellten) Stahlbetonbauteile 12', 12".

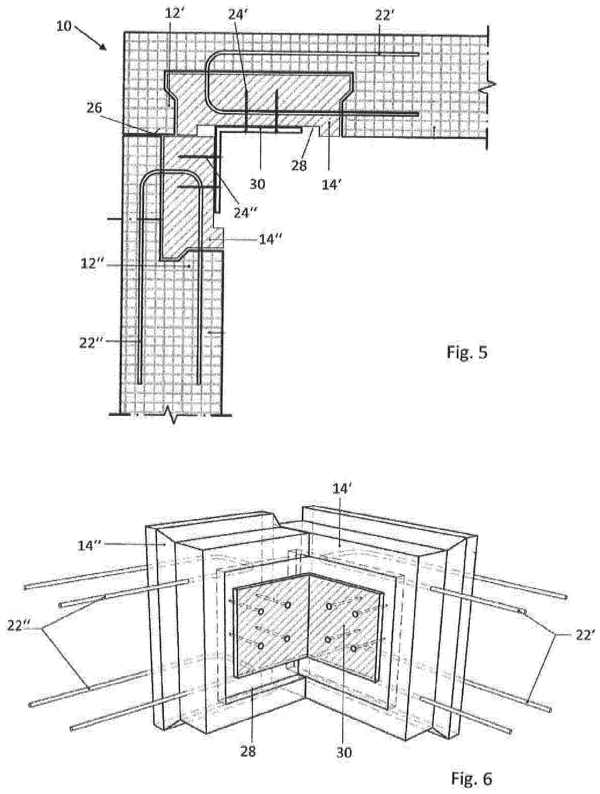

Figur 5 zeigt schematisch eine geschnittene Draufsicht einer Anordnung 10 in einer weiteren Ausgestaltung. Die Stahlbetonbauteile 12', 12" sind rechtwinkelig zueinander angeordnet. In ihrer Angrenzungsfläche 26 weisen die Stahlbetonbauteile 12', 12" wenigstens bereichsweise ein Ankerelement 14', 14" auf. Die Ankerelemente 14', 14" weisen jeweils eine Vertiefung 28 auf. Die Vertiefung 28 des Stahlbetonbauteils 12' ist von einem Rand des Ankerelements 14' umgeben. Die Vertiefung 28 des Stahlbetonbauteils 12" ist auf der dem Stahlbetonbauteil 12' zugewandten Seite offen. Hierdurch lassen sich die Stahlbetonbauteile 12', 12" mittels einer Winkelplatte 30 miteinander verbinden. Die Winkelplatte 30 ist innerhalb der Vertiefungen 28', 28" angeordnet und ragt nicht über die Außenkontur des jeweiligen Stahlbetonbauteils 12', 12" hinaus. Die Winkelplatte 30 ist mittels Schrauben 24 an den Ankerelementen 14', 14" befestigt. Denkbar ist auch, dass die Winkelplatte 30 selbst stiftförmige Elemente aufweist, die direkt in die Ankerelemente 14', 14" eingebracht werden können.

Die Ankerelemente 14', 14" sind bei dem dargestellten Ausführungsbeispiel so konturiert, dass sie formschlüssig in dem jeweiligen Stahlbetonbauteil 12', 12" verankert sind. Die Ankerelemente 14', 14" sind zusätzlich jeweils über U-förmig gebogene Verankerungsstäbe 22', 22' mit dem Beton verbunden.

Figur 6 zeigt eine perspektivische Ansicht auf die beiden miteinander verbundenen Ankerelemente 14', 14" gemäß Figur 5.

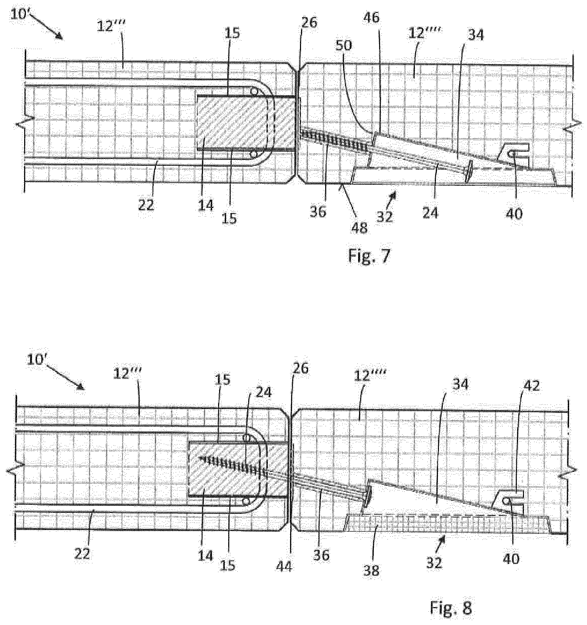

Figur 7 zeigt eine geschnittene Draufsicht einer Anordnung 10' in einer dritten Ausgestaltung, wobei die Stahlbetonbauteile 12‴, 12ʺʺ noch nicht miteinander verbunden sind. Das Stahlbetonbauteil 12ʺʺ weist wenigstens einen Verankerungskörper 32 auf, wobei der Verankerungskörper 32 einen Hohlraum 34 zur Aufnahme wenigstens eines Verbindungselements 24 aufweist. Der Verankerungskörper 32 weist den Vorteil auf, dass hierdurch das Stahlbetonbauteil 12"" gemeinsam mit den entsprechenden Verbindungselementen 24 fertig konfektioniert zur Baustelle transportiert werden kann.

Der Verankerungskörper 32 bzw. der Hohlraum 34 schließen bevorzugt flächig mit der Oberfläche des Stahlbetonbauteils 12ʺʺ ab. Es kann aber auch zwischen dem Verankerungskörper und der Oberfläche ein Freiraum verbleiben.

Der Verankerungskörper 32 ist an einer Längsseite des Stahlbetonbauteils 12ʺʺ angeordnet. Weist das Stahlbetonbauteil 12ʺʺ mehrere Verankerungskörper auf, dann sind diese bevorzugt auf derselben Seite des Stahlbetonbauteils 12ʺʺ angeordnet, wobei diese dann insbesondere beabstandet voneinander angeordnet sind.

Eine Rückwand 46 des Hohlraums 34 und eine Oberfläche 48 des Stahlbetonbauteils 12ʺʺ verlaufen in einem spitzen Winkel zueinander. Der Winkel beträgt bevorzugt zwischen 0° und 45°.

Der Verankerungskörper 32 weist wenigstens eine Führungshülse 36 zur Durchführung des Verbindungselements 24 auf. Die Hülse 36 erstreckt sich von dem Hohlraum 34 bzw. einer Wand 50 des Hohlraums 34 bis zur Angrenzungsfläche 26 des Stahlbetonbauteils 12ʺʺ.Die Angrenzungsfläche 26 weist wenigstens eine Öffnung auf, die mit der Hülse 36 zusammenwirkt und durch die das Verbindungselement 24 durchführbar ist. Eine Stirnseite der Hülse 36 grenzt bevorzugt an die Angrenzungsfläche 26 an.

Die Hülse 36 und die Wand 50 des Hohlraums 34 verlaufen im Wesentlichen senkrecht zueinander. Hierdurch liegt in einem zusammengefügten Zustand zweier Stahlbetonbauteile 12‴, 12ʺʺ das als Schraube ausgebildete Verbindungselement 24 mit seinem Kopf flächig an der Wand 50 an, wodurch eine sichere Verbindung sichergestellt werden kann.

Die Hülse 36 verläuft bevorzugt in einem Winkel zwischen 45° und 90° zur Angrenzungsfläche 26. Vorteilhaft weist der Verankerungskörper 32 mehrere Hülsen 36 auf.

Figur 8 zeigt eine geschnittene Draufsicht der Anordnung 10', wobei die Stahlbetonbauteile 12‴, 12ʺʺ durch wenigstens ein Verbindungselement 24 miteinander verbunden sind. Das Verbindungselement 24 erstreckt sich dabei von dem Hohlraum 34 des Verankerungskörpers 32 durch die Führungshülse 36 hindurch bis in das Ankerelement 14 des Stahlbetonbauteils 12‴ hinein. Das Verbindungselement 24 liegt mit seinem Schraubenkopf auf der Wand 50 des Verankerungskörpers 32 flächig auf.

Das Ankerelement 14 schließt stirnseitig im Wesentlichen bündig mit der Angrenzungsfläche 26 ab. An den im Beton liegenden Seitenflächen ist das Ankerelement 14 durch Armierungsgewebe 15 verstärkt, das mit dem Ankerkörper des Ankerelements 14 haftend verbunden ist.

Die Angrenzungsfläche 26 kann im Bereich des Ankerelements ebenfalls eine Außenarmierung aufweisen und zur weiteren Verstärkung gegebenenfalls zusätzlich ein plattenförmiges, bevorzugt metallisches Element 44. Das Element weist bevorzugt wenigstens eine Öffnung für ein Verbindungselement auf. Besonders bevorzugt ist das Element in einer Vertiefung der Angrenzungsfläche 26 angeordnet. Der gesamte Verankerungskörper 32, d.h. einschließlich des plattenförmigen Elementes 44, kann auch einstückig aus Kunststoff, beispielsweise als Kunststoff-Spritzgussteil ausgebildet sein. Das plattenförmige Element 44 kann genutzt werden, um beim Gießen des Betons den Verankerungskörper 32 in der Form zu fixieren.

Vorteilhaft ist es, wenn der Verankerungskörper 32 einen Deckel 38 aufweist. Der Deckel 38 verschließt den Hohlraum 34. Der Deckel 38 verläuft plan mit der Oberfläche des Stahlbetonbauteils 12ʺʺ. Der Deckel 38 kann aus demselben Material wie der restliche Verankerungskörper 32 bestehen. Es ist aber auch möglich, dass der Deckel 38 aus einem anderen Werkstoff (z.B. Faserbeton) besteht.

Der Verankerungskörper 32 besteht bevorzugt aus einem Kunststoff. Der Verankerungskörper 32 lässt sich so einfach und kostengünstig als Massenprodukt herstellen. Um eine gute Verbindung zwischen dem Verankerungskörper 32 und dem Beton zu erzielen, weist das Stahlbetonbauteil 12ʺʺ einen Ankerstab 40 auf, der den Verankerungskörper 32 mit dem Beton verbindet. Der Verankerungskörper 32 kann hierfür eine Hinterschneidung aufweisen, die in Verbindung mit dem Ankerstab 40 steht. Hierdurch lässt sich die Verbindung weiter verbessern.

Der Verankerungskörper 32 kann in das Stahlbetonbauteil 12ʺʺ einbetoniert sein. Er wird hierzu beim Gießen des Stahlbetonbauteils 12ʺʺ in die Form eingelegt und dann eingegossen. Denkbar ist aber auch, dass beim Gießen des Stahlbetonbauteils 12ʺʺ durch das Einlegen eines Platzhalters ein Hohlraum für den Verankerungskörper 32 vorgesehen wird und der Hohlräume dann nachträglich mit dem Verankerungskörper 32 bestückt wird.

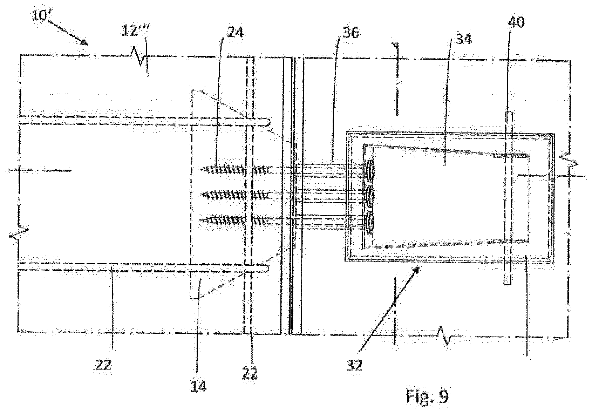

Figur 9 zeigt eine Vorderansicht der in Figur 8 dargestellten Anordnung 10'. Die Stahlbetonbauteile 12‴, 12ʺʺ sind mittels einer Mehrzahl von Verbindungselementen 24 miteinander verbunden. Das Stahlbetonbauteil 12ʺʺ weist eine entsprechende Anzahl von Führungshülsen 36 auf, die beabstandet und parallel voneinander angeordnet sind.

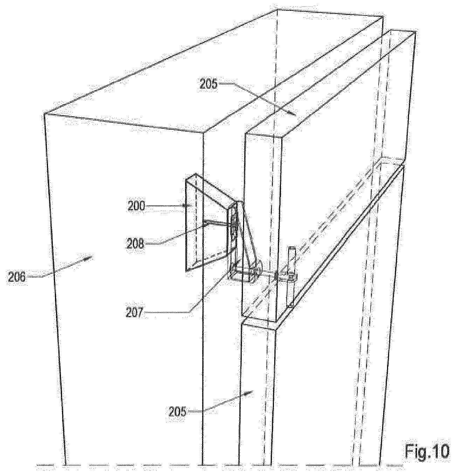

Figur 10 zeigt ein Anwendungsbeispiel einer Ausführungsform eines erfindungsgemäßen Ankerelements 200 in Bezug auf eine Fassadenverankerung. Das Ankerelement 200 ist in ein Betonteil 206 eingegossen. Eine Holzschraube 208 ist in das Ankerelement 200 eingeschraubt und hält ein Halteelement 207, an dem Fassadenelemente 205 befestigt sind. Es versteht sich, dass diese Darstellung nur schematisch ist und mehrere Ankerelemente 200 vorgesehen sein können und jedes Halteelement 207 durch mehrere Holzschrauben 208 an dem jeweiligen Ankerelement 200 befestigt sein kann.

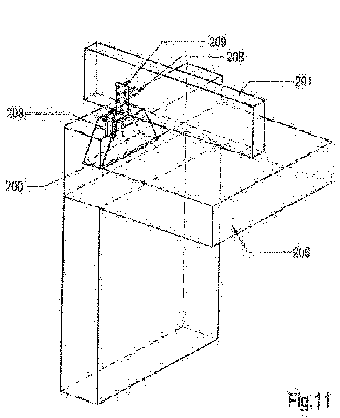

Figur 11 zeigt ein Anwendungsbeispiel einer Ausführungsform eines erfindungsgemäßen Ankerelements 200 in Bezug auf eine weitere Art der Verankerung. Das Ankerelement 200 ist in ein Betonteil 206 eingegossen.

Ein Winkelhalteelement 209 ist mit einem Steg mittels Holzschrauben 208 an dem Ankerelement 200 befestigt. An dem anderen Steg des Winkelhalteelements 209 ist mittels weiterer Holzschrauben 208 ein Holzbalken 201 einer Dachkonstruktion (nicht gezeigt) befestigt.

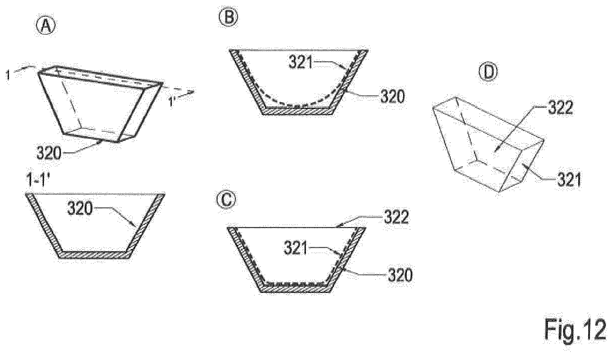

Fig. 12 zeigt in Darstellungen A bis D in schematischer und skizzenhafter Weise Herstellungsschritte eines ersten Ausführungsbeispiels eines Verfahrens zur Herstellung eines Ankerelements. Darstellung A in Figur 12 zeigt perspektivisch eine Gießform 320 und eine diesbezügliche Schnittansicht. In die Gießform 320 kann, wie in Darstellung B von Figur 12 gezeigt, eine Lage eines Gewebes 321 eingelegt werden. Das Gewebe 321 ist in Darstellung B von Figur 12 lediglich zum Zwecke der Sichtbarmachung beabstandet von der Innenwandung der Gießform 320 gezeigt. In der Praxis wird Wert darauf gelegt, dass das Gewebe 321 möglichst faltenfrei, zur Erhöhung der Festigkeit, und möglichst unmittelbar an der Innenwandung der Gießform 320 in diese eingelegt wird, welche die Außenkontur des fertigen Ankerelements 322 bestimmt. Das Gewebe kann beispielsweise ein Glasfasergewebe sein. Dem Fachmann stehen jedoch zahlreiche Alternativen zur Verfügung, beispielsweisen Karbon- oder Teflongewebe. Faltenfreiheit des Gewebes 321 ist vorteilhaft im Hinblick auf die spätere Tragwirkung des Ankerelements 322 als Verbundwerkstoff.

Darstellung C von Figur 12 zeigt den Zustand, in dem Kunststoffmaterial, beispielsweise PU Gießharz, in die Gießform 320 eingegossen ist, um das Ankerelement 322 zu formen. Das Gießharz verbindet sich mit dem Gewebe 321 so, dass Gießharz und Gewebe zusammen einen Verbundwerkstoff bilden, dessen mechanische Eigenschaften mit Blick auf den Anwendungszweck des Ankerelements 322, wie er vorstehend in einer Vielzahl von Beispielen erläutert wurde, gegenüber reinem Gießharz verbessert sind. Alternativ zu dem Gießharz können auch andere Materialien verwendet werden, beispielsweise ein modifizierter Kunststoff, der vorzugsweise von sich aus eine Verbindung mit Gewebe 321 eingehen sollte, wobei andernfalls zusätzliche Verbindungsmittel verwendet werden.

Darstellung D in Figur 12 zeigt perspektivisch das Ankerelement 322, das an drei Stirnseiten eine Außenarmierung mit Gewebe 321 aufweist. Es versteht sich, dass gegebenenfalls auch weitere oder alle Flächen des Ankerkörpers mit Gewebe armiert sein können.

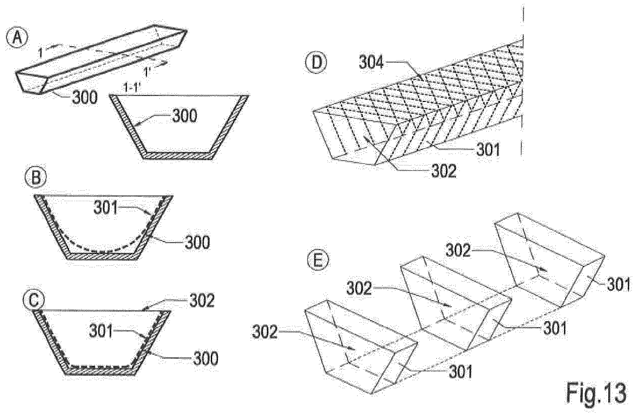

Fig. 13 zeigt in Darstellungen A bis E Herstellungsschritte eines zweiten Ausführungsbeispiels eines Verfahrens zur Herstellung eines Ankerelements, das dem vorstehend unter Bezug auf Figur 12 erläuterten Verfahren weitgehend entspricht, sich von diesem jedoch dadurch unterscheidet, dass eine Mehrzahl von Ankerelementen 302 gleichzeitig gegossen wird.

Darstellung A in Figur 13 zeigt perspektivisch eine Gießform 300 und eine diesbezügliche Schnittansicht. Die Gießform 300 gemäß dieser Ausführungsform des erfindungsgemäßen Verfahrens zur Herstellung eines Ankerelements weist in der Richtung senkrecht zu dem trapezförmigen Querschnitt eine größere Länge auf als die im vorstehend unter Bezug auf Figur 12 erläuterten Verfahren verwendete Gießform 320. In die Gießform 300 kann wiederum, wie in Darstellung B von Figur 12 gezeigt, eine Lage eines Gewebes 301 eingelegt werden.

Darstellung C von Figur 13 zeigt den Zustand, in dem das Kunststoffmaterial, beispielsweise PU Gießharz, in die Gießform 300 eingegossen ist, um das Ankerelement 302 zu formen

Darstellung D in Figur 13 zeigt perspektivisch einen länglichen Barren mit trapezförmigem Querschnitt. In der Darstellung D in Figur 13 sind zudem Schnittebenen 304 angedeutet. Nach dem Ausformen kann der längliche Barren mit trapezförmigem Querschnitt längs der Schnittebenen 304 in Scheiben geeigneter Dicke aufgeschnitten werden. Jede Scheibe ist dann ein Ankerelement 302, das an drei Stirnseiten eine Außenarmierung mit Gewebe 301 aufweist. Die Dicke des Ankerelements 302, das heißt die Abmessung senkrecht zu dem trapezförmigen Querschnitt, ergibt sich aus dem Abstand der Schnittebenen 304.

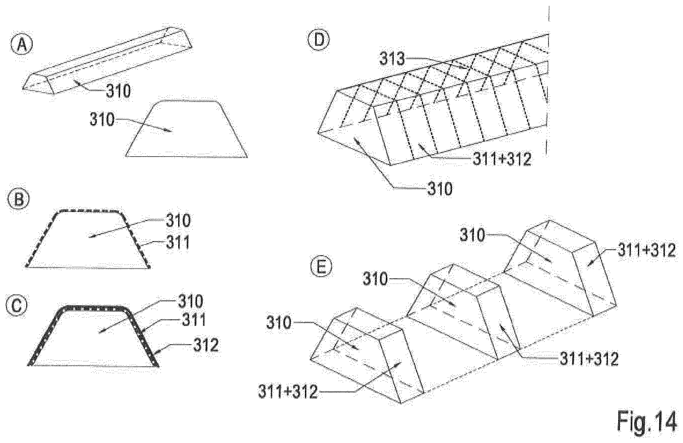

Fig. 14 zeigt in Darstellungen A bis E Herstellungsschritte eines dritten Ausführungsbeispiels eines Verfahrens zur Herstellung eines Ankerelements, das sich von den vorstehend unter Bezug auf die Figuren 12 und 13 erläuterten Verfahren insbesondere dadurch unterscheidet, dass zunächst ein Ankerkörper 310 aus Kunststoff beziehungsweise ein entsprechender Barren zur späteren Unterteilung längs Schnittlinien 313 gefertigt wird und das Gewebe 311 dann, ein- oder gegebenenfalls mehrlagig, unter Verwendung von Harz 311 als Klebemittel auf den Ankerkörper bzw. den Barren aufgebracht bzw. auflaminiert wird.

Bei allen vorstehend erläuterten Verfahren kann das Gewebe an den Oberflächen des Ankerkörpers, insbesondere an den Stirnseiten, mit Zugspannungen eingelegt bzw. aufgebracht werden, um die Entstehung eines Erstrisses im Ankerkörper aufgrund von Zugspannungen auf ein höheres Lastniveau anzuheben womit eine zusätzliche Verstärkung des Ankerelements entsteht.

Zudem stehen dem Fachmann zahlreiche weitere Produktionsformen des Ankerkörpers zur Verfügung, beispielsweise die Produktionsform des 3D-Druckes.

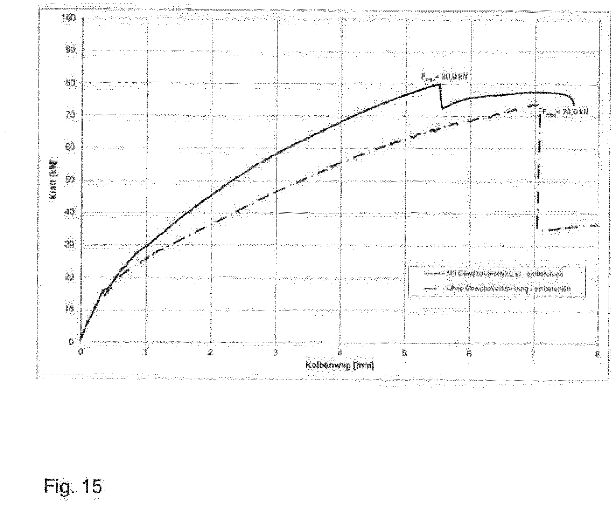

Im Folgenden werden unter Bezug auf Figur 15 eine vergleichende Untersuchung der technischen Auswirkungen der erfindungsgemäßen Außenarmierung eines Ankerelements und deren Ergebnisse beschrieben.

Die Steigerung der Tragfähigkeit von einbetonierten Ankerkörpern durch die erfindungsgemäße Außenarmierung eines Ankerelements wurde untersucht am Beispiel eines Ankerelements aus Polyurethan-Gießharz, das mittels einer Außenarmierung in Form einer übergossenen Gewebelage aus Glasfasern verstärkt war. In das Ankerelement aus Polyurethan-Gießharz wurden jeweils Holzschrauben aus Stahl eingedreht, die als Kraftaufnahmeelemente für Zugversuche dienten.

Zur Prüfung des Verhaltens des Ankerelements unter Einbaubedingungen wurden die Ankerelemente einbetoniert, und zwar in einem Versuch ein Ankerelement mit einer derartigen Außenarmierung und in einem Vergleichsversuch ein Ankerelement ohne Außenarmierung. Sowohl eine umfassende Stahlbetonbewehrung der Proben als auch die Betonfestigkeit wurden in beiden Versuchen identisch gehalten. Die Ergebnisse der Zugversuche sind in dem nachfolgenden Diagramm wiedergegeben, wobei auf der Abszisse der Weg eines Zugkolbens und auf der Ordinate die von dem Zugkolben aufgebrachte Kraft aufgetragen ist und wobei der obere Graph mit durchgezogener Linie das Ergebnis für das Ankerelement mit Außenarmierung und der untere, strichpunktierte Graph das Ergebnis für das Ankerelement ohne Außenarmierung zeigt.

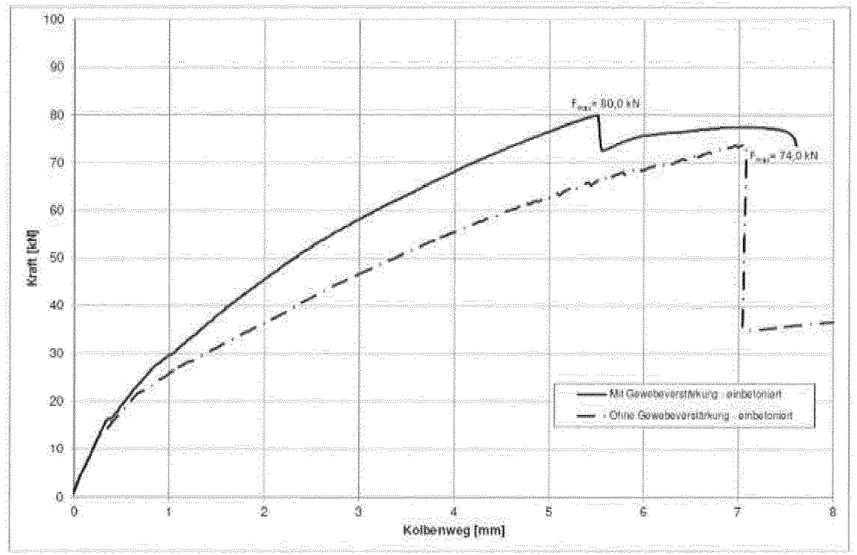

Eine entsprechende Darstellung ist in Fig. 15 gezeigt.

Die Verbindung ohne die Außenarmierung durch Gewebe versagte spontan in Form eines Sprödbruchs bei einer Last von 74,0 kN infolge eines Bruchs des Ankerkörpers. Nach dem Bruch konnte nur noch eine geringe Last von ca. 35 kN übertragen werden. Von besonderer Bedeutung ist, dass aufgrund des Sprödbruchs keine Versagensankündigung durch z. B. Verformungszunahme auf einem konstanten Lastniveau oder Geräuschentwicklung zu verzeichnen ist.

Mit einem erfindungsgemäßen Ankerelement, das eine Außenarmierung mittels eines Gewebes aufwies, konnte die Traglast im einbetonierten Zustand auf 80,0 kN erhöht werden. Das Versagen der Verbindung trat infolge Schraubenauszug aus dem Ankerkörper auf. Der Ankerkörper selbst wies Risse auf, die dem Bruchbild der Proben mit einem Ankerelement ohne Gewebeverstärkung entsprechen, ohne jedoch zu Brechen. Nach Erreichen der Maximallast konnte über einen längeren Verformungsweg eine Last von ca. 75 kN von der Verbindung aufgenommen werden. Es zeigte sich somit ein duktiles Bruchverhalten und es trat ein Versagen mit Ankündigung auf.

Weiterhin stellte sich aufgrund der infolge des Gewebes strukturierten Oberfläche der kraftübertragenden Flanken des Ankerkörpers ein besserer Verbund zum umhüllenden Beton ein, der zu einer geringeren Verformung und einem reduzierten Ausziehen des Ankerkörpers aus dem Beton führt.

Zusammenfassend konnten durch den Vergleichsversuch die folgenden Vorteile einer Außenarmierung eines Ankerelements der in Rede stehenden Art festgestellt werden:
- Erhöhung der Bruchlast
- Vermeidung eines Sprödbruchversagens des Ankerkörpers und damit Schaffung von Sicherheitsreserven durch Versagensankündigung
- Erhöhung der Tragfähigkeit nach dem Bruch des Ankerkörpers
- Geringere Verformung der Verbindung unter Belastung

### - Bezugszeichenliste -

- 10, 10*: Anordnung
- 12', 12", 12‴, 12ʺʺ: Stahlbetonbauteile
- 14, 14', 14', 200, 302, 310, 322: Ankerelement
- 15, 301, 311, 322: Armierungsgewebe
- 16', 16": Profilierung Ankerelement
- 18', 18": Erhöhung/Vorsprung Profilierung
- 20', 20": Vertiefung Profilierung
- 22', 22": Verankerungsstab
- 24, 24', 24": Verbindungselement (Vollgewindeschraube)
- 26: Angrenzungsfläche
- 28', 28": Vertiefung
- 30: Winkelplatte
- 32: Verankerungskörper
- 34: Hohlraum
- 36: Führungshülse
- 38: Deckel
- 40: Ankerstab
- 42: Hinterschneidung Verankerungskörper
- 44: Verstärkungsplatte
- 46: Rückwand
- 48: Oberfläche Stahlbetonbauteil
- 50: Wand Hohlraum
- 300, 320: Gießform
- 304,313: Schnittlinie

## Patentansprüche

1. Betonbauteil mit einem einbetonierten Ankerelement (14, 200, 302, 310, 322),
wobei das Ankerelement (14, 200, 302, 310, 322) einen Ankerkörper aus einem Kunststoff aufweist, der holzartige Eigenschaften aufweist, so dass dieser Verbindungselemente aus der Holztechnik aufnehmen kann,
und wobei das Ankerelement (14, 200, 302, 310, 322) ein Gewebe (15, 301, 311, 321) aufweist, mit dem zumindest ein Teil der Außenoberfläche des Ankerkörpers armiert ist, um eine Außenarmierung zu bilden, die konfiguriert ist eine Verbindung mit dem Beton des Betonbauteils zu verbessern, wobei mindestens eine Seitenfläche des Ankerelements (14, 200, 302, 310, 322) an einer Oberfläche des Betonbauteils angeordnet ist und mindestens eine, die Außenarmierung aufweisende Seitenfläche des Ankerelements (14, 200, 302, 310, 322) mit Beton verbunden ist.

2. Betonbauteil nach Anspruch 1, **dadurch gekennzeichnet, dass** der Kunststoff Gießharz ist.

3. Betonbauteil nach Anspruch 2, **dadurch gekennzeichnet, dass** das Gießharz Polyurethan-Gießharz ist.

4. Betonbauteil nach einem der vorstehenden Ansprüche, **dadurch gekennzeichnet, dass** das Gewebe (15, 301, 311, 321) ein Glasfasergewebe ist.

5. Betonbauteil nach einem der vorstehenden Ansprüche, **dadurch gekennzeichnet, dass** der Ankerkörper einen trapezförmigen Querschnitt aufweist.

6. Betonbauteil nach einem der vorstehenden Ansprüche, **dadurch gekennzeichnet, dass** das Gewebe (15, 301, 311, 321) an drei Seiten des Ankerkörpers vorgesehen ist.

7. Betonbauteil nach Anspruch 6, soweit dieser auf Anspruch 5 rückbezogen ist, **dadurch gekennzeichnet, dass** die drei Seitenflächen Flächen sind, die sich senkrecht zu dem trapezförmigen Querschnitt erstrecken, und dass eine erste Fläche die kürzere der beiden Grundseiten des Trapez, eine zweite Fläche den ersten Schenkel des Trapez und eine dritte Fläche den zweiten Schenkel des Trapez beinhaltet.

8. Verfahren zur Herstellung eines Betonbauteils mit einem einbetonierten Ankerelement (14, 200, 302, 310, 322), nach einem der Patentansprüche 1 bis 7 mit den Schritten:
Bereitstellen einer Gießform (300, 320),
Einlegen eines Gewebe (15, 301, 321) in die Gießform (300, 320),
Eingießen eines Kunststoffes in die Gießform (300, 320), so dass der flüssige Kunststoff das Gewebe (15, 301, 321) an die Gießform (300, 320) andrückt und das Gewebe (15, 301, 321) tränkt.

9. Verfahren nach Anspruch 8, wobei die Gießform (300, 320) barrenförmig ausgeführt ist und ein der Gießform (300, 320) nach Ausformung entnehmbarer Kunststoffbarren entlang Schnittlinien (304, 313) in einzelne Ankerelemente (14, 200, 302, 322) zerschnitten wird.

10. Verwendung eines Ankerelements (14, 200, 302, 310, 322) in einem Betonbauteil mit einem einbetonierten Ankerelement nach einem der Ansprüche 1 bis 9, und zur Verbindung mit einem weiteren Betonbauteil,
wobei das Ankerelement (14, 200, 302, 310, 322) einen Ankerkörper aus einem Kunststoff aufweist, der holzartige Eigenschaften aufweist, so dass dieser Verbindungselemente aus der Holztechnik aufnehmen kann,
und das Ankerelement (14, 200, 302, 310, 322) ein Gewebe (15, 301, 311, 321) aufweist, mit dem zumindest ein Teil der Außenoberfläche des Ankerkörpers armiert ist, um eine Außenarmierung zu bilden, die konfiguriert ist eine Verbindung mit dem Beton des Betonbauteils zu verbessern.

## Claims

1. Concrete component with an anchor element (14, 200, 302, 310, 322) set in concrete,
wherein the anchor element (14, 200, 302, 310, 322) has an anchor body made of a plastic material which has wood-like properties so that it can receive connecting elements from wood technology,
and wherein the anchor member (14, 200, 302, 310, 322) comprises a fabric (15, 301, 311, 321) with which at least a portion of the outer surface of the anchor body is reinforced to form an outer reinforcement configured to enhance a bond with the concrete of the concrete component, wherein at least one side surface of the anchor member (14, 200, 302, 310, 322) is disposed on a surface of the concrete component and at least one side surface of the anchor member (14, 200, 302, 310, 322) having the outer reinforcement is bonded to concrete.

2. Concrete component according to claim 1, **characterized in that** the plastic material is cast resin.

3. Concrete component according to claim 2, **characterized in that** the cast resin is polyurethane cast resin.

4. Concrete component according to one of the preceding claims, **characterized in that** the fabric (15, 301, 311, 321) is a glass fibre fabric.

5. Concrete component according to one of the preceding claims, **characterized in that** the anchor body has a trapezoidal cross-section.

6. Concrete component according to one of the preceding claims, **characterized in that** the fabric (15, 301, 311, 321) is provided on three sides of the anchor body.

7. Concrete component according to claim 6, insofar as this is dependent on claim 5, **characterized in that** the three side surfaces are surfaces which extend perpendicular to the trapezoidal cross-section, and **in that** a first surface comprises the shorter of the two base sides of the trapezoid, a second surface comprises the first leg of the trapezoid and a third surface comprises the second leg of the trapezoid.

8. Method for producing a concrete component with an anchor element (14, 200, 302, 310, 322) set in concrete, according to one of claims 1 to 7, comprising the steps of
Providing a casting mold (300, 320),
inserting a fabric (15, 301, 321) into the casting mold (300, 320),
pouring a plastic material into the casting mold (300, 320) so that the liquid plastic material presses the fabric (15, 301, 321) against the casting mold (300, 320) and impregnates the fabric (15, 301, 321).

9. Method according to claim 8, wherein the casting mold (300, 320) is designed in the form of an ingot and a plastic ingot which can be removed from the casting mold (300, 320) after shaping is cut along cutting lines (304, 313) into individual anchor elements (14, 200, 302, 322).

10. Use of an anchor element (14, 200, 302, 310, 322) in a concrete component with an anchor element set in concrete according to one of claims 1 to 9, and for connection to a further concrete component,
wherein the anchor element (14, 200, 302, 310, 322) has an anchor body made of a plastic material which has wood-like properties so that it can receive connecting elements from wood technology,
and the anchor element (14, 200, 302, 310, 322) comprises a fabric (15, 301, 311, 321) with which at least a portion of the outer surface of the anchor body is reinforced to form an outer reinforcement configured to enhance a bond with the concrete of the concrete member.

## Revendications

1. Élément de construction en béton muni d'un élément d'ancrage (14, 200, 302, 310, 322) encastré dans le béton,
dans laquelle l'élément d'ancrage (14, 200, 302, 310, 322) présente un corps d'ancrage en matière plastique présentant des propriétés de type bois, de sorte que ledit corps d'ancrage peut accueillir des éléments de liaison issus de la technologie du bois,
et dans laquelle l'élément d'ancrage (14, 200, 302, 310, 322) présente un tissu (15, 301, 311, 321) avec lequel au moins une partie de la surface extérieure du corps d'ancrage est armée afin de former une armature extérieure configurée pour améliorer la liaison avec le béton de l'élément de construction en béton, dans laquelle au moins une surface latérale de l'élément d'ancrage (14, 200, 302, 310, 322) est agencée sur une surface de l'élément de construction en béton et au moins une surface latérale de l'élément d'ancrage (14, 200, 302, 310, 322) présentant l'armature extérieure est reliée au béton.

2. Élément de construction en béton selon la revendication 1, **caractérisé en ce que** la matière plastique est une résine coulée.

3. Élément de construction en béton selon la revendication 2, **caractérisé en ce que** la résine coulée est une résine coulée à base de polyuréthane.

4. Élément de construction en béton selon l'une quelconque des revendications précédentes, **caractérisé en ce que** le tissu (15, 301, 311, 321) est un tissu en fibres de verre.

5. Élément de construction en béton selon l'une quelconque des revendications précédentes, **caractérisé en ce que** le corps d'ancrage présente une section transversale trapézoïdale.

6. Élément de construction en béton selon l'une quelconque des revendications précédentes, **caractérisé en ce que** le tissu (15, 301, 311, 321) est prévu sur trois côtés du corps d'ancrage.

7. Élément de construction en béton selon la revendication 6 dans la mesure où elle dépend de la revendication 5, **caractérisé en ce que** les trois surfaces latérales sont des surfaces qui s'étendent perpendiculairement à la section transversale trapézoïdale, et **en ce qu'**une première surface inclut le plus court des deux côtés de base du trapèze, une deuxième surface inclut la première branche du trapèze et une troisième surface inclut la deuxième branche du trapèze.

8. Procédé de fabrication d'un élément de construction en béton muni d'un élément d'ancrage (14, 200, 302, 310, 322) selon l'une quelconque des revendications 1 à 7, comprenant les étapes consistant à :
fournir un moule (300, 320),
mettre en place un tissu (15, 301, 321) dans le moule (300, 320),
verser une matière plastique dans le moule (300, 320) de sorte que la matière plastique liquide presse le tissu (15, 301, 321) contre le moule (300, 320) et imprègne le tissu (15, 301, 321).

9. Procédé selon la revendication 8, dans lequel le moule (300, 320) est réalisé en forme de lingot et un lingot de matière plastique pouvant être retiré du moule (300, 320) après formage est découpé en éléments d'ancrage (14, 200, 302, 322) individuels le long de lignes de coupe (304, 313).

10. Utilisation d'un élément d'ancrage (14, 200, 302, 310, 322) dans un élément de construction en béton muni d'un élément d'ancrage encastré dans le béton selon l'une quelconque des revendications 1 à 9 et permettant une liaison avec un autre élément de construction en béton,
dans laquelle l'élément d'ancrage (14, 200, 302, 310, 322) présente un corps d'ancrage en matière plastique présentant des propriétés de type bois, de sorte que ledit corps d'ancrage peut accueillir des éléments de liaison issus de la technologie du bois,
et l'élément d'ancrage (14, 200, 302, 310, 322) présente un tissu (15, 301, 311, 321) avec lequel au moins une partie de la surface extérieure du corps d'ancrage est renforcée afin de former une armature extérieure configurée pour améliorer la liaison avec le béton de l'élément de construction en béton.
